# EUROPÄISCHE PATENTSCHRIFT

(11) **EP 2 108 612 B1**
(45) Veröffentlichungstag und Bekanntmachung des Hinweises auf die Patenterteilung: **09.11.2011**
(21) Anmeldenummer: 09003990.0
(22) Anmeldetag: 19.03.2009
(51) Int. Cl.: B66D 1/12

(54) **Winde**
Hoist
Treuil

(30) Priorität: 10.04.2008 DE 202008004985 U
(43) Veröffentlichungstag der Anmeldung: 14.10.2009
(73) Patentinhaber: Liebherr-Werk Biberach GmbH, 88400 Biberach an der Riss (DE)
(72) Erfinder: Graner, Klaus, 88524 Uttenweiler-Ahlen (DE); Fenker, Oliver, 88448 Attenweiler (DE); Lis, Johann, 88499 Riedlingen (DE); Münst, Thomas, 88444 Ummendorf-Fischbach (DE)
(74) Vertreter: Thoma, Michael

(56) Entgegenhaltungen:
- EP-A- 0 919 512
- DE-A1- 19 733 299
- GB-A- 1 213 531

## Beschreibung

Die vorliegende Erfindung betrifft eine Winde für Hebezeuge, insbesondere Krane, Seilbagger und ähnliche Baumaschinen, mit einer Seiltrommel, einem Elektromotor zum Antrieb der Seiltrommel, der im Inneren der Seiltrommel aufgenommen ist, sowie einer zumindest teilweise im Inneren der Seiltrommel aufgenommenen Leistungs- und/oder Steuerungselektronik für den Elektromotor umfassend zumindest einen Frequenzumrichter und/oder -umformer.

Allgemein bekannt sind elektromotorisch angetriebene Seilwinden, bei denen Getriebe und Motor außerhalb der Windentrommel angeordnet sind. Genauso gibt es Seilwinden, bei denen ein Planetengetriebe innerhalb der Windentrommel platziert ist, über das die Windentrommel von einem außerhalb platzierten Motor angetrieben wird, vgl. DE 19 11 195 U1. Darüber hinaus sind Seilwinden bekannt, bei denen sich zusätzlich zum integrierten Planetengetriebe ebenfalls der Elektromotor innerhalb der Seilwindentrommel befindet, vgl. DE 197 52 003 C2, die eine kompakte Bauweise auch für Winden für hohe Lastanforderungen dadurch erreichen will, dass ein Asynchronmotor mit einer zwangsgeführten Flüssigkeitskühlung verwendet wird, die seriell sowohl den Stator als auch den Rotor erfasst. Die Ansteuerungselektronik für den Elektromotor ist hierbei in einen Schaltschrank aufgenommen, der in den Windenbock integriert ist und sich zwischen zwei an dem Windenbock gelagerten Seiltrommeln schmiegt.

Weiterhin zeigt die DE 197 33 299 A1 eine Antriebseinheit für Seilaufzüge umfassend eine Seiltrommel, innerhalb derer ein elektrischer Antriebsmotor angeordnet ist. Zusätzlich nimmt die Seiltrommel einen Drehgeber für eine Frequenzumrichtersteuerung auf.

Die Ansteuerung der beschriebenen Antriebsmotoren zentral von einem Schaltschrank aus erfordert indes lange Elektrokabel. Der Verkabelungsaufwand ist dabei insbesondere vom Umrichter zum Motor erheblich. Durch lange Leitungen entstehen Störaussendungen, die sich bezüglich der elektromagnetischen Verträglichkeit negativ auswirken. Ebenso können lange Motorzuleitungen zu Reflexionen und dadurch zu Spannungsüberhöhungen führen, welche die Lebensdauer von Frequenzumrichter und Motor erheblich einschränken können.

Alternativ hierzu wurde bereits versucht, bei unverbauten und außerhalb der Seiltrommel angeordneten Elektromotoren im Motor integrierte Umrichter zu verwenden. Letzteres ist jedoch auf vergleichsweise kleine Leistungen begrenzt.

Hiervon ausgehend liegt der vorliegenden Erfindung die Aufgabe zugrunde, eine verbesserte Winde der eingangs genannten Art zu schaffen, die Nachteile des Standes der Technik vermeidet und Letzteren in vorteilhafter Weise weiterbildet. Insbesondere soll ein leistungsstarker stufenlos drehzahlvariabler Elektroantrieb für eine Seilwinde geschaffen werden, die Platz sparend baut, keine negativen Auswirkungen auf die elektromagnetische Verträglichkeit besitzt und die Lebensdauer verkürzende Spannungsüberhöhungen vermeidet.

Erfindungsgemäß wird diese Aufgabe durch eine Winde gemäß Anspruch 1 gelöst. Bevorzugte Ausgestaltungen der Erfindung sind Gegenstand der abhängigen Ansprüche.

Es wird also vorgeschlagen, neben dem Elektromotor auch zumindest die wesentlichen Bausteine der Leistungs- und/oder Steuerungselektronik für den Elektromotor in die Seiltrommel zu integrieren, um lange Verkabelungswege zu vermeiden. Erfindungsgemäß ist die Leistungs- und/oder Steuerungselektronik für den Elektromotor zumindest teilweise im Inneren der Seiltrommel aufgenommen. Hierdurch werden nicht nur kurze Verkabelungswege erreicht, Störaussendungen mit negativen Auswirkungen auf die elektromagnetische Verträglichkeit vermieden und die Lebensdauer von Umrichter und Motor beeinträchtigende Spannungsüberhöhungen reduziert, sondern auch eine besonders kompakte Bauweise der Winde erzielt. Um thermische Probleme bei der Anordnung der Leistungs- und/oder Steuerungselektronik im Trommelinneren zu vermeiden, wird die Leistungs- und/oder Steuerungselektronik in Weiterbildung der Erfindung mittels einer Elektronikkühlvorrichtung gekühlt. Die Kühlung der im Inneren der Seiltrommel aufgenommenen Elektronikbausteine erfolgt hierbei insbesondere mittels einer Flüssigkühlung, die in hocheffizienter Weise die in den Elektronikbausteinen entstehende Verlustwärme abführen kann. Gleichzeitig kann durch eine Flüssigkühlung der Elektronik eine kompakte Bauweise derselben erzielt werden, welche wiederum die Integration der Elektronik in die Seiltrommel vereinfacht.

Erfindungsgemäß ist der Frequenzumrichter bzw. -umformer oder Pulswechselrichter im Inneren der Seiltrommel angeordnet und flüssiggekühlt. Der Frequenzumrichter ist hierbei vollständig im Inneren der Seiltrommel aufgenommen, wobei ggf. ein Klemmbrett oder ein Klemmkasten des Frequenzumrichters aus der Trommel herausschauen kann, um ein einfaches Anschließen der Verkabelung erreichen zu können. Von dem Klemmbrett bzw. - kasten abgesehen, das bzw. der nach einer vorteilhaften Ausführung der Erfindung ebenfalls im Seiltrommelinneren angeordnet sein kann, sind in Weiterbildung der Erfindung insbesondere die Zwischenkreiskondensatoren, der Steuerteil sowie die Leistungsmodule als Herzstück des Umrichters innerhalb der Seiltrommel angeordnet. Insbesondere die Leistungstransistoren sind hierbei über den Flüssigkühlkreis der Elektronikkühlvorrichtung flüssiggekühlt, um die entstehende Verlustwärme effizient abzuführen. Die Kühlflüssigkeit wird hierbei vorteilhafterweise zwangsumgewälzt, um eine ausreichende Wärmeabfuhr zu erzielen.

Der Flüssigkühlkreis für den Frequenzumrichter kann hierbei einen Kühlmantel und/oder Kühlrohrschlangen umfassen, die an dem Umrichter angeordnet sind und/oder flächig mit dessen Elektronikbausteinen in Kontakt stehen.

Die Flüssigkühlung kann hierbei grundsätzlich mit verschiedenen Kühlflüssigkeiten arbeiten, beispielsweise könnte eine Ölkühlung vorgesehen sein. In bevorzugter Weiterbildung der Erfindung jedoch umfasst der Flüssigkühlkreis zur Kühlung des Frequenzumrichters eine Kühlflüssigkeit auf Wasserbasis, insbesondere ein Wasser-Glykol-Gemisch oder ggf. auch reines Wasser. Eine solche Wasserkühlung besitzt eine sehr hohe Wärmekapazität, wodurch eine effektive Kühlleistung bei moderaten Durchflussmengen erreicht werden kann. Zudem ergeben sich durch die hohe Wärmekapazität geringe Temperaturdifferenzen zwischen Vor- und Rücklauf. Dies hat zur Folge, dass bei Serienschaltung das zuletzt gekühlte Bauteil ein noch zulässiges Temperaturniveau vorfindet.

In vorteilhafter Weiterbildung der Erfindung wird nicht nur die in der Seiltrommel angeordnete Leistungs- und/oder Steuerungselektronik flüssiggekühlt, sondern auch der Elektromotor. Eine Motorkühlvorrichtung kann hierzu zumindest einen Flüssigkühlkreis zur Kühlung des Elektromotors aufweisen, der eine Mantelkühlung und/oder Kühlrohrschlangen umfassen kann, wobei in bevorzugter Weiterbildung der Erfindung auch eine Mischung aus Luftkühlung und Flüssigkühlung für den Elektromotor vorgesehen sein kann. Nach einer besonders vorteilhaften Ausführung der Erfindung kann beispielsweise vorgesehen sein, dass die Flüssigkühlung für den Elektromotor neben einem Kühlmantel für die Statorwicklung Kühlschlangen in den Wickelkopfräumen umfasst, in denen mittels Lüfterrädern eine interne, d.h. ohne Außenumgebungsluft arbeitende Luftzirkulation erzeugt wird, die durch die und/oder um die Wickelköpfe herum und ggf. auch durch den Rotor hindurch streicht, wobei die Kühlluft durch Hinwegführen über die genannten Kühlrohrschlangen die aufgenommene Wärme an den Flüssigkühlkreis abgibt. Je nach Ausbildung des Elektromotors können jedoch auch andere Motorkühlvorrichtungen vorgesehen sein. Beispielsweise kann anstelle einer üblichen Asynchronmaschine ein permanent magneterregter Synchronmotor Verwendung finden, der durch die prinzipbedingt größtenteils im Stator entstehenden Verluste und die insgesamt hocheffiziente Bauweise auch ausreichend durch eine Flüssigkühlung beispielsweise in Form einer Mantelkühlung alleine ausreichend gekühlt werden kann. Es können jedoch auch andere Arten von Elektromotoren mit anderen Wirkprinzipien Verwendung finden, so beispielsweise in Weiterbildung der Erfindung ein Asynchronmotor, eine Transversalflussmaschine oder eine geschaltete Reluktanzmaschine oder auch Mischformen hieraus.

In vorteilhafter Weiterbildung der Erfindung erfolgt der Antrieb der Seiltrommel durch den Elektromotor über ein zwischengeschaltetes Getriebe, das vorteilhafterweise ebenfalls im Inneren der Seiltrommel aufgenommen ist. Insbesondere kann in Weiterbildung der Erfindung hierbei ein Planetengetriebe vorgesehen sein, das vorzugsweise mehrstufig ausgebildet sein kann. Um im Bereich des Getriebes auftretende Verlustwärme zu beseitigen und hierdurch thermische Probleme im Trommelinneren zu vermeiden, kann in Weiterbildung der Erfindung dem im Trommelinneren angeordneten Getriebe eine Getriebekühlvorrichtung zugeordnet sein, die in vorteilhafter Ausführung der Erfindung ebenfalls einen Flüssigkühlkreis umfasst. Durch die Flüssigkühlung des zwischengeschalteten Getriebes kann dessen Verlustwärme effizient aus dem Trommelinneren herausgezogen werden.

Die Flüssigkühlkreise der Elektronikkühlvorrichtung, der Motorkühlvorrichtung und/oder der Getriebekühlvorrichtung können grundsätzlich miteinander verknüpft sein, wobei in Weiterbildung der Erfindung die Flüssigkühlkreisläufe in Serie miteinander verschaltet sein können, wobei eine gemeinsame Pumpe zur Umwälzung des Kühlmittels vorgesehen sein kann. Hierdurch wird eine besonders einfache und kleinbauende Ausführung der Kühlvorrichtung erreicht.

Um die Kühlung jedoch besser den unterschiedlichen zulässigen Temperaturniveaus und den unterschiedlichen thermischen Zeitkonstanten anpassen zu können, kann in vorteilhafter Weiterbildung der Erfindung auch vorgesehen sein, dass zumindest einer der Flüssigkühlkreise von Elektronikkühlvorrichtung, Motorkühlvorrichtung und Getriebevorrichtung von den restlichen Flüssigkühlkreisen abgekoppelt und/oder separat ausgebildet ist. Insbesondere kann der Flüssigkühlkreis der Elektronikkühlvorrichtung von dem Flüssigkühlkreis der Motorkühlvorrichtung und der Getriebekühlvorrichtung separat ausgebildet sein, wobei die separate Ausbildung des Elektronikkühlkreises zumindest eine separate Pumpe umfasst, um die Kühlflüssigkeit zur Elektronikkühlung separat umwälzen zu können. Alternativ oder zusätzlich können auch andere Strömungssteuermittel vorgesehen sein, um den Kühlmittelstrom in den verschiedenen Flüssigkühlkreisen individuell steuern zu können, beispielsweise in Form eines Steuerventils, eines Schaltventils oder einer anderen Ventilvorrichtung, mittels derer der Kühlflüssigkeitsstrom von ggf. nur einer Pumpe her kommend unterschiedlich aufgeteilt werden kann. Vorteilhafterweise kann hierbei auch mit einer hinsichtlich des Förderstroms variablen Pumpe gearbeitet werden, um je nach Bedarf verschiedene Volumenströme bereitstellen zu können.

Bei vollständig separater Ausbildung der Flüssigkühlkreise kann ggf. auch mit verschiedenen Kühlflüssigkeiten in den verschiedenen Flüssigkühlkreisen gearbeitet werden, um unterschiedliche Wärmekapazitäten zu fahren. Alternativ kann jedoch auch mit demselben Kühlfluid in den verschiedenen Kühlkreisen gearbeitet werden, wobei in vorteilhafter Weise auch ein gemeinsamer Tank vorgesehen sein kann, aus dem das Kühlmittel bezogen und in den es zurückgefördert wird.

In Weiterbildung der Erfindung kann jeder Kühlkreis seinen eigenen Rückkühler besitzen. Alternativ hierzu kann auch für zumindest zwei der Kühlkreise ein gemeinsamer Rückkühler verwendet werden.

Nach einer vorteilhaften Ausführung der Erfindung kann auch mit einer Mischform aus teilweise zusammengefassten Kühlkreisläufen und teilweise separaten Kühlkreisläufen gearbeitet werden. Vorteilhafterweise können beispielsweise der Kühlkreislauf der Motorkühlung und der Kühlkreislauf der Getriebekühlung zusammengefasst sein, wobei vorteilhafterweise eine Parallelschaltung mit einem dazwischen vorgesehenen Strömungssteuermittel zur Beeinflussung der Aufteilung des Fluidstroms zwischen den beiden parallelen Armen vorgesehen sein kann. Andererseits ist der Kühlkreislauf für die Elektronikkühlung separat ausgebildet, insbesondere dahingehend, dass der Elektronikkühlkreis eine separate Pumpe aufweist, die unabhängig von der Pumpe des Kühlkreises für den Motor und das Getriebe antreibbar ist. Ggf. können die beiden Kühlkreisläufe über einen gemeinsamen Rückkühler geführt sein, wobei nichtsdestotrotz durch die separate Pumpe ein individuelles Betreiben der Elektronikkühlung möglich ist. Durch eine solche teilweise Zusammenfassung der Kühlkreisläufe ist einerseits eine individuelle Anpassung der Kühlleistung an das Temperaturniveau und die thermische Zeitkonstante möglich, während andererseits eine noch einfache Ausbildung mit synergetischer Ausnutzung der Komponenten erfolgt.

In Weiterbildung der Erfindung ist der Frequenzumrichter derart in die Seiltrommel integriert, dass im Servicefall das Gerät oder Komponenten hiervon gewechselt werden können. Gemäß einer vorteilhaften Ausführung der Erfindung kann die Seiltrommel eine stirnseitige Zugangsöffnung aufweisen, durch die hindurch der Frequenzumrichter zugänglich und austauschbar ist. Vorteilhafterweise ist ein Austausch des Frequenzumrichters oder Komponenten hiervon bei eingebauter Winde möglich.

In bevorzugter Weiterbildung der Erfindung umfasst der Frequenzumrichter bzw. die in die Seiltrommel integrierte Leistungs- und/oder Steuerungselektronik einen lösbaren elektrischen Anschluss für die Zuleitungen. Vorteilhafterweise kann der elektrische Anschluss der Leistungs- und/oder Steuerungselektronik schraubbar ausgeführt sein und/oder mit einem Klemmbrett ausgestattet sein. Für gemäßigte Leistungen ist auch eine Steckverbindung denkbar, welche den weiteren Vorteil hätte, dass Verdrahtungsfehler ausgeschlossen sind.

In Weiterbildung der Erfindung kann der Frequenzumrichter stirnseitig am Elektromotor angebaut sein. Alternativ hierzu kann der Frequenzumrichter in bevorzugter Weiterbildung der Erfindung auch vom Motor beabstandet am stirnseitigen Ende des Innenraums der Seiltrommel angeordnet sein, wobei vorteilhafterweise vorgesehen sein kann, dass der elektrische Anschluss und/oder ein Klemmkasten aus dem Innenraum der Seiltrommel herausragt und/oder auf der Stirnseite der Seiltrommel angeordnet ist. In jedem Fall ist vorteilhafterweise vorgesehen, dass die Motorzuleitungen so kurz ausgeführt sind, dass abgestrahlte elektromagnetische Strahlung auf ein Minimum reduziert ist. Die Spannungsüberhöhung an den Motoranschlüssen ist aufgrund der minimalen Leitungslänge ebenfalls minimiert. Die Lebensdauer der Wicklungsisolierung ist optimiert. Zudem ist der Verkabelungsaufwand sehr gering.

Die elektrische Versorgung kann grundsätzlich in verschiedener Weise zum Umrichter geführt sein. Je nach Umrichtertyp kann eine zweiadrige Leitung für die Zwischenkreisspannung oder eine Leitung für eine Wechselspannung mit beliebiger Phasenanzahl zum Umrichter geführt sein, der beispielsweise ohne integrierten Gleichrichter oder auch mit einem integrierten Gleichrichter ausgebildet sein kann, der wiederum ungesteuert oder gesteuert ausgebildet sein kann. Die genannten Anschlussleitungen können grundsätzlich ungeschirmt ausgeführt sein, wobei vorteilhafterweise bei einem integrierten gesteuerten Gleichrichter abgeschirmte Anschlussleitungen vorgesehen sind.

Wird ein ungesteuerter Gleichrichter verwendet, ist keine Einspeisung einer Rückleistung in der Versorgungsnetz vorgesehen. Vorteilhafterweise kann in diesem Fall ein Anschluss für einen Rückleistungswiderstand vorgesehen sein.

In Weiterbildung der Erfindung kann ein Drehzahl- und/oder Drehwinkelgeber vorgesehen sein, der stirnseitig auf einer Außenseite der Seiltrommel platziert sein kann. In alternativer Weiterbildung der Erfindung kann der genannte Drehzahl- und/oder Drehwinkelgeber ebenfalls in den Innenraum der Seiltrommel integriert sein. Ist in der zuvor genannten Weise eine vom Motor beabstandete Anordnung des Frequenzumrichters vorgesehen, kann in vorteilhafter Weise der genannte Drehzahl- und/oder Drehwinkelgeber zwischen dem Motor und dem Frequenzumrichter im Innenraum der Seiltrommel angeordnet sein, insbesondere auf der Antriebswelle des Motors sitzen. Hierdurch wird auch der Verkabelungsaufwand für den Sensor minimiert. Zudem ist der Sensor geschützt vor großen mechanischen Schockbelastungen und magnetischen Streufeldern einer Magnetbremse.

Um eine einfache Anpassung von Leistungsbedarf der Winde und der Antriebskomponenten Motor und Umrichter aufeinander zu ermöglichen, kann in vorteilhafter Weise der Frequenzumrichter einen modularen Aufbau besitzen. In Weiterbildung der Erfindung kann der Frequenzumrichter mehrere Teilumrichter umfassen, die jeweils einem Wicklungsteil des Elektromotors zugeordnet sind. Insbesondere kann zu jedem Teilumrichter im Motor ein korrespondierender Wicklungsteil vorgesehen sein, wodurch die Motorwicklung einfacher verschaltet und Platz sparender ausgeführt werden kann. Vorteilhafterweise können die separaten Module des Frequenzumrichters separat demontierbar sein.

Die Erfindung wird nachfolgend anhand bevorzugter Ausführungsbeispiele und zugehöriger Zeichnungen näher erläutert. In den Zeichnungen zeigen:
- Fig. 1:: eine schematische Längsschnittansicht einer Seilwinde nach einer vor- teilhaften Ausführung der Erfindung, bei der der Frequenzumrichter der Leistungs- und/oder Steuerungselektronik in das Innere der Seiltrommel integriert ist und von einer Flüssigkühlung gekühlt werden kann,
- Fig. 2:: eine ausschnittsweise, perspektivische Ansicht des Umrichters und des- sen Komponenten im Innenraum der Seiltrommel,
- Fig. 3:: eine schematische Darstellung des Flüssigkühlkreises zur Kühlung der Elektronik,
- Fig. 4:: eine schematische Darstellung der Verschaltung der Kühlkreisläufe für die Elektronik, den Motor und das Getriebe der Seilwinde aus Fig. 1, und
- Fig. 5:: eine schematische Darstellung der Anordnung der Kühlkreisläufe für die Elektronik, den Motor und das Getriebe nach einer alternativen, vorteil- haften Ausführung der Erfindung, gemäß der die Kühlkreisläufe für den Motor und das Getriebe zusammengefasst sind.

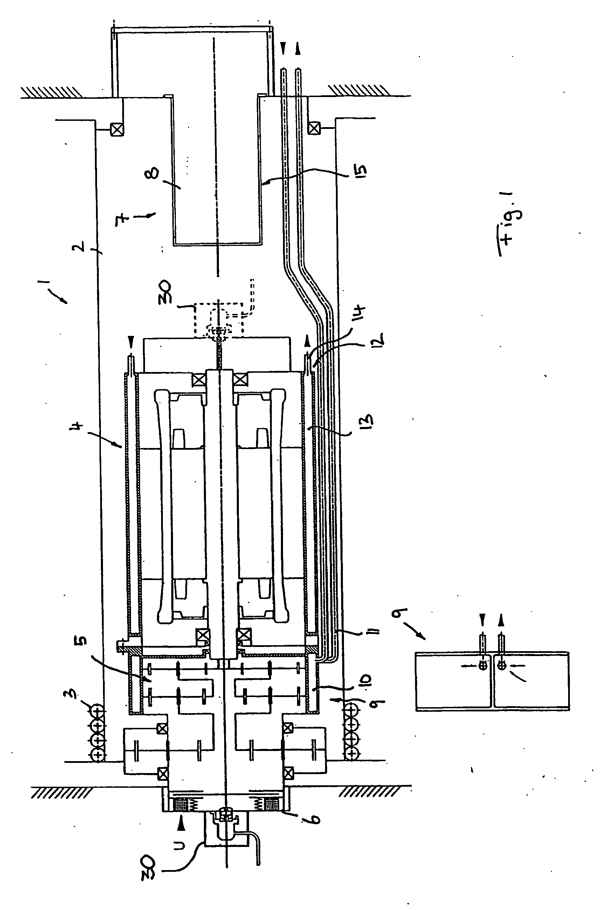

Die in Fig. 1 gezeigte Seilwinde 1 kann vorteilhafterweise in Hebezeugen wie Turmdrehkränen, Mobilkränen, Hafenumschlagkränen oder ähnlichen Baumaschinen Verwendung finden. Sie umfasst eine drehbar gelagerte Seiltrommel 2, auf die in sich bekannter Weise ein Hubseil 3 aufgewickelt werden kann. Ein im Inneren der Seiltrommel 2 angeordneter Elektromotor 4 treibt über ein ebenfalls im Inneren der Seiltrommel 2 angeordnetes Planetengetriebe 5, das gemäß der gezeichneten Ausführungsform vorteilhafterweise zweistufig ausgebildet sein kann, die Seiltrommel 2 an. Auf der einen Stirnseite der Seiltrommel 2 ist eine Bremse 6 vorgesehen.

Der genannte Elektromotor 4 wird mittels einer Leistungs- und/oder Steuerungselektronik 7 angesteuert, die in noch näher beschriebener Weise ebenfalls in dem Innenraum der Seiltrommel 2 angeordnet ist, vgl. Fig. 1. Der genannte Elektromotor 4 ist dabei geeignet, an einem Frequenzumrichter 8 bzw. Pulswechselrichter stufenlos drehzahlvariabel betrieben zu werden, um die Seilwinde 1 stufenlos drehzahlvariabel antreiben zu können. Der genannte Elektromotor 4 kann hierbei als Asynchronmotor ausgebildet sein, jedoch vorteilhafterweise auch als permanent magneterregter Synchronmotor, dessen größtenteils im Stator entstehenden Verluste sehr gut mittels einer Mantelkühlung thermisch abgeführt werden können. Es können jedoch generell auch andere Elektromotortypen wie beispielsweise eine Transversalflussmaschine, eine geschaltete Reluktanzmaschine oder Mischformen hieraus vorgesehen sein.

Wie Fig. 1 zeigt, werden sowohl das Getriebe 5 als auch der Elektromotor 4 flüssiggekühlt, wobei eine Getriebekühlvorrichtung 9 einen in das Getriebegehäuse integrierten Kühlmantel 10 aufweist, durch den mittels eines Getriebekühlkreises 11 ein geeignetes Kühlmittel zirkuliert wird. Auch die Motorkühlvorrichtung 12 umfasst in der gezeichneten Ausführung eine Mantelkühlung mit einem in das Motorgehäuse integrierten Kühlmantel 13, der an einen Motorkühlkreis 14 angeschlossen ist. Um thermische Verluste im Bereich der Leistungs- und/oder Steuerungselektronik 7, insbesondere des Frequenzumrichters 8 trotz dessen Integration in den Trommelinnenraum abführen zu können, wird auch die Elektronik, insbesondere der Frequenzumrichter 8 flüssiggekühlt. Die Elektronikkühlvorrichtung 15 umfasst nicht näher gezeigte, an den Umrichterkomponenten entlang geführte Kühlrohrschlangen und/oder einen Kühlmantel, der in ein Umrichtergehäuse und/oder eine Montageplatte für die Umrichterkomponenten integriert ist. Geeignetes Kühlmittel wird in einem Elektronikkühlkreis 16 zirkuliert. Vorteilhafterweise kann als Kühlmittel Wasser oder ein Gemisch auf Wasserbasis, insbesondere ein Wasser-Glykol-Gemisch Verwendung finden, das eine sehr hohe Wärmekapazität besitzt. Das in den genannten Kühlkreisläufen zirkulierte Kühlmittel wird vorteilhafterweise nicht zur Schmierung des Getriebes oder der Motorwelle verwendet.

Die genannten Kühlkreise können hierbei grundsätzlich in verschiedener Weise miteinander verschalten oder auch nicht verschalten sein. Beispielsweise können die drei Kühlkreise miteinander kombiniert sein, insbesondere in Serie hintereinander geschaltet sein, so dass mittels nur einem Kühlmittel-Fördermittel die Umwälzung erreicht werden kann. Um eine für die einzelnen Komponenten individuelle Steuerung des Kühlmittelflusses erreichen zu können, können die Kühlkreise auch zueinander parallel geschaltet sein, wobei geeignete Strömungssteuermittel vorgesehen sind, um die Fluidströmung individuell anpassen zu können. Dies können beispielsweise unterschiedliche Leitungsdurchmesser sein, insbesondere aber auch Steuer- und/oder Schaltventile an den Verzweigungspunkten der Parallelschaltung.

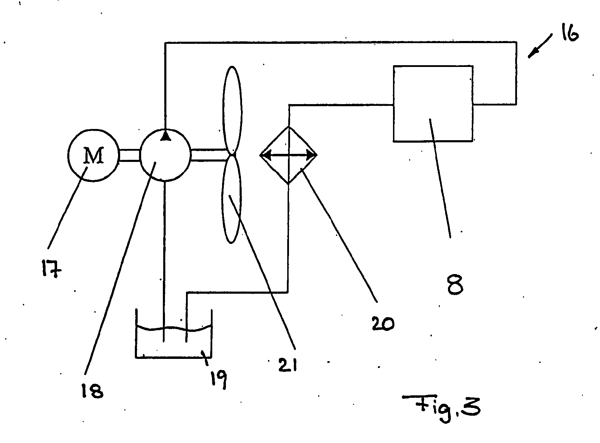

Insbesondere kann in Weiterbildung der Erfindung auch vorgesehen sein, dass die Kühlkreisläufe zumindest teilweise separat voneinander ausgebildet sind. In Weiterbildung der Erfindung können jeweils komplett separate Kühlkreise wie in Fig. 3 gezeigt vorgesehen sein, d.h. der Motorkühlkreis 14, der Getriebekühlkreis 11 und der Elektronikkühlkreis 16 können jeweils wie in Fig. 3 gezeigt separat ausgebildet sein. Die in Fig. 3 gezeichnete Ausführung umfasst eine von einem Motor 17 angetriebene Kühlmittelpumpe 18, die das Kühlmittel aus einem Tank 19 durch das zu kühlende Bauteil wie beispielsweise den Frequenzumrichter 8 zirkuliert und auf dem Weg zurück zum Tank 19 durch einen Wärmetauscher 20 führt, dem vorteilhafterweise ein ebenfalls vom Motor 17 angetriebener Lüfter 21 zugeordnet sein kann.

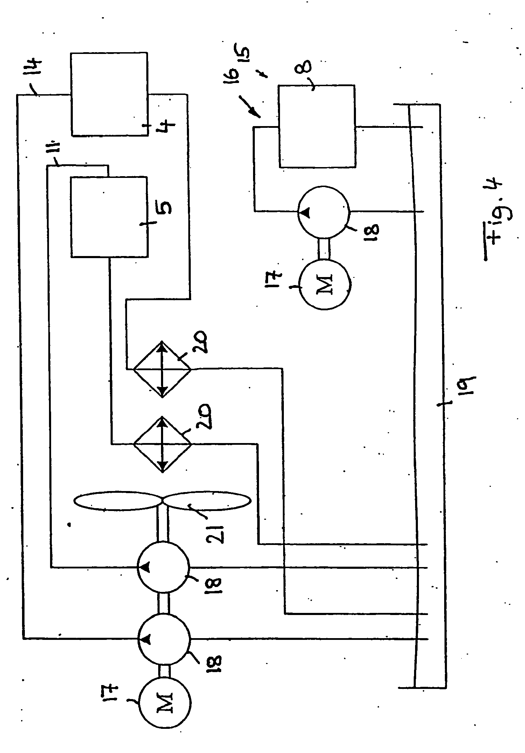

Wie Fig. 4 zeigt, können die Kühlkreisläufe 11, 14 und 16 einen zum Teil kombinierten Antrieb ihrer Kühlmittelpumpen besitzen und einen gemeinsamen Kühlmitteltank 19 nutzen. Konkret sind in der in Fig. 4 gezeichneten Ausführung die Kühlmittelpumpen 18 des Getriebekühlkreises 11 und des Motorkühlkreises 14 von einem gemeinsamen Motor 17 angetrieben, der auch einen gemeinsamen Lüfter 21 antreibt, welcher die Wärmetauscher 20 des Getriebekühlkreises 11 und des Motorkühlkreises 14 kühlt. Hingegen wird die Kühlmittelpumpe 18 des Elektronikkühlkreises 16 von einem separaten Motor 17 angetrieben, um die Kühlung der Elektronik unabhängig von der Kühlung des Motors und des Getriebes vornehmen zu können. Ggf. kann nämlich die Kühlung des Motors und des Getriebes abgeschalten werden, während eine Kühlung der Elektronik aufrecht zu erhalten ist, wodurch ein Vorteil hinsichtlich der Gesamtenergiebilanz erzielt wird. Wie Fig. 4 zeigt, kann ggf. im Elektronikkühlkreis 16 ein Wärmetauscher auch weggelassen werden. Da die Kühlflüssigkeit aus dem gemeinsamen Tank 19 abgezogen und zurückgespeist wird, ist ein eigener Wärmetauscher ggf. nicht notwendig.

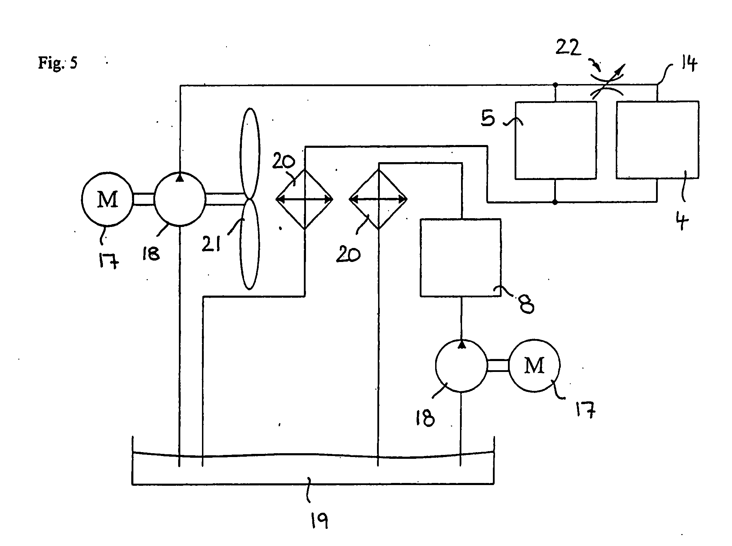

Wie Fig. 5 zeigt, können auch die Kühlkreisläufe selbst teilweise zusammengefasst sein. Insbesondere können der Motorkühlkreis 14 und der Getriebekühlkreis 11 zusammengefasst sein, wobei in Fig. 5 eine Parallelschaltung des Getriebekühlkreises 11 mit dem Motorkühlkreis 14 vorgesehen ist. Über ein Strömungssteuermittel 22 beispielsweise in Form eines Steuerventils kann die Menge der durch die Parallelschaltungsäste strömenden Kühlmittelmenge verändert werden.

Der Elektronikkühlkreis 16 ist hingegen auch bei der Ausführung nach Fig. 5 vorteilhafterweise separat ausgebildet, wobei in dieser Ausführung ein Wärmetauscher 20 auch im Elektronikkühlkreis 16 vorgesehen ist, der gemeinsam mit dem Wärmetauscher 20 des zusammengefassten Motor- und Getriebekühlkreises von einem gemeinsamen Lüfter 21 beaufschlagt werden kann.

Wie Fig. 1 zeigt, kann die Leistungs- und/oder Steuerungselektronik 7 an einem stirnseitigen Ende des Innenraums der Seiltrommel 2 angeordnet sein, wobei die Seiltrommel 2 vorteilhafterweise eine stirnseitige Zugangsöffnung 23 besitzen kann, durch die hindurch die Elektronik 7 auch bei eingebauter Winde zugänglich und austauschbar bzw. ggf. wartbar ist. Die genannte Zugangsöffnung 23 kann sich hierbei durch den ortsfesten Windenlagerbock hindurch erstrecken, an dem die Seiltrommel 2 drehbar gelagert ist, vgl. Fig. 1. Dabei kann vorgesehen sein, dass ein Klemmkasten 24 auf der Außenseite der Seiltrommel platziert ist, während die eigentlichen Elektronikkomponenten der Elektronik 7 im Seiltrommelinneren aufgenommen sind.

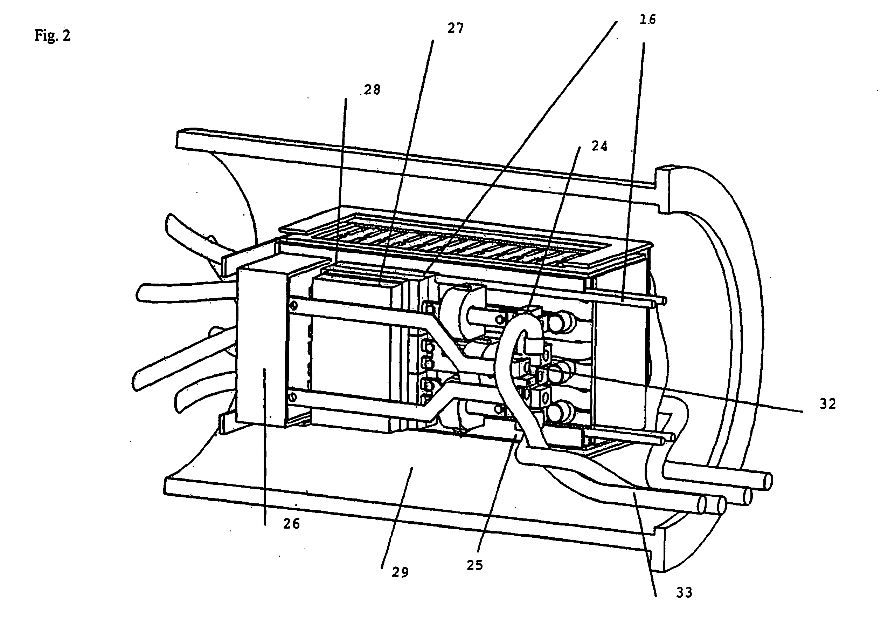

Eine mögliche Ausführung der Frequenzumrichteranordnung im Inneren der Seiltrommel 2 zeigt Fig. 2. Bei der in Fig. 2 gezeichneten Ausführung umfasst der Frequenzumrichter 8 ein Klemmbrett 25, auf dem alle nötigen elektrischen Anschlüsse vorhanden sind. Das Klemmbrett 25 ist hierbei so angeordnet, dass eine gute Zugänglichkeit besteht, die es erlaubt, den Frequenzumrichter 8 oder Komponenten hiervon zu tauschen. Ebenso sind in dem Frequenzumrichter 8 Zwischenkreiskondensatoren 26 eingebaut. Der Steuerteil 27 und die Leistungsmodule 28 sind kompakt als Herzstück des Frequenzumrichters 8 integriert. Die Leistungstransistoren sind über den Elektronikkühlkreis 16 flüssiggekühlt. Über Sensoren 29 kann der Motorstrom gemessen werden.

Der Frequenzumrichter 8 ist vorteilhafterweise modular aufgebaut und umfasst mehrere Umrichtermodule. Zu jedem Umrichtermodul bzw. Teilumrichter gibt es im Elektromotor 4 einen korrespondierenden Wicklungsteil, so dass die Motorwicklung einfacher verschaltet und Platz sparender ausgeführt werden kann. Durch die modulare Ausbildung des Frequenzumrichters 8 können Leistungsbedarf der Winde und der Antriebskomponenten Motor und Umrichter aufeinander angepasst werden.

Über kurze Motorzuleitungen 31 ist der Frequenzumrichter 8 mit dem Elektromotor 4 verbunden. An die Stromversorgung ist der Frequenzumrichter 8 gemäß Fig. 2 über einen elektrischen, schraubbar ausgeführten Anschluss 32 und eine daran angeschlossen zweiadrige Leitung 33 angeschlossen.

## Patentansprüche

1. Winde für Hebezeuge, insbesondere Turmdrehkrane, Mobilkrane, Hafenkrane oder Maschinen wie Seilbagger, mit einer Seiltrommel (2), einem Elektromotor (4) zum Antrieb der Seiltrommel (2), der im Inneren der Seiltrommel (2) aufgenommen ist, sowie einer Leistungs- und/oder Steuerungselektronik (7) für den Elektromotor (4) umfassend zumindest einen Frequenzumrichter (8) und/oder -umformer, wobei die Leistungs- und/oder Steuerungselektronik (7) für den Elektromotor (4) zumindest teilweise im Inneren der Seiltrommel (2) aufgenommen ist, **dadurch gekennzeichnet, dass** der Frequenzumrichter (8) vollständig im Inneren der Seiltrommel (2) aufgenommen ist und eine Elektronikkühlvorrichtung (15) im Inneren der Seiltrommel (2) eine Flüssigkühlung für den Frequenzumrichter (8) aufweist.

2. Winde nach dem vorhergehenden Anspruch, wobei die Elektronikkühlvorrichtung (15) einen Flüssigkühlkreis zur Kühlung des Frequenzumrichters aufweist, der einen Kühlmantel und/oder Kühlrohrschlangen an dem oder in dem Frequenz-umrichter (8) aufweist.

3. Winde nach einem der beiden vorhergehenden Ansprüche, wobei die Flüssigkühlung der Elektronikkühlvorrichtung (15) eine Kühlflüssigkeit auf Wasserbasis, vorzugsweise Wasser oder ein Wasser-Glykol-Gemisch, umfasst.

4. Winde nach einem der vorhergehenden Ansprüche, wobei eine Motorkühlvorrichtung (12) umfassend zumindest einen Flüssigkühlkreis (14) zur Kühlung des Elektromotors (4) vorgesehen ist.

5. Winde nach dem vorhergehenden Anspruch, wobei der Flüssigkühlkreis (14) der Motorkühlvorrichtung (12) separat vom Flüssigkühlkreis (16) der Elektronikkühlvorrichtung (15) ausgebildet ist.

6. Winde nach dem vorhergehenden Anspruch, wobei die Kühlkreise der Motorkühlvorrichtung (12) und der Elektronikkühlvorrichtung (15) separate Kühlfluid-Fördermittel (18) umfassen.

7. Winde nach Anspruch 5, wobei der Flüssigkühlkreis (16) der Elektronikkühlvorrichtung (15) mit dem Flüssigkühlkreis (14) der Motorkühlvorrichtung (12) in Serie oder parallel geschaltet ist.

8. Winde nach einem der vorhergehenden Ansprüche, wobei eine Getriebekühlvorrichtung (9) umfassend zumindest einen Flüssigkühlkreis (11) zur Kühlung eines im Inneren der Seiltrommel (2) angeordneten Getriebes (5) vorgesehen ist.

9. Winde nach dem vorhergehenden Anspruch, wobei der Flüssigkühlkreis der Getriebekühlvorrichtung (9) separat vom Kühlkreis der Elektronikkühlvorrichtung (15) ausgebildet ist, und/oder mit dem Flüssigkühlkreis der Motorkühlvorrichtung (12) zusammengefasst, insbesondere in Serie oder parallel geschaltet ist.

10. Winde nach einem der vorhergehenden Ansprüche, wobei die Seiltrommel (2) eine stirnseitige Zugangsöffnung aufweist, durch die hindurch der Frequenzumrichter (8) zugänglich und vorzugsweise auch bei eingebauter Winde austauschbar ist.

11. Winde nach einem der vorhergehenden Ansprüche, wobei der Frequenzumrichter (8) vom Elektromotor (4) beabstandet am stirnseitigen Ende des Innenraums der Seiltrommel (2) angeordnet ist, wobei ein Drehzahl- und/oder -winkelgeber (30) zwischen dem Frequenzumrichter (8) und dem Elektromotor (4) in der Seiltrommel (2) aufgenommen ist.

12. Winde nach einem der Ansprüche 1 bis 10, wobei der Frequenzumrichter (8) stirnseitig am Elektromotor (4) angebaut ist.

13. Winde nach einem der vorhergehenden Ansprüche, wobei der Frequenzumrichter (8) modular aufgebaut ist und mehrere Teilumrichter umfasst, die jeweils einem Wicklungsteil des Elektromotors (4) zugeordnet sind.

## Claims

1. A winch for hoisting gear, in particular revolving tower cranes, mobile cranes, harbour cranes or machines such as cable-operated excavators, having a hoisting drum (2), an electric motor (4) for driving the hoisting drum (2) which is received in the interior of the hoist drum (2) and having power electronics and/or control electronics (7) for the electric motor (4) comprising at least one frequency inverter (8) and/or frequency converter, wherein the power electronics and/or control electronics (7) for the electric motor (4) is received at least partially in the interior of the hoisting drum (2), **characterised in that** the frequency inverter (8) is received completely in the interior of the hoisting drum (2) and an electronics cooling apparatus (15) in the interior of the hoisting drum (2) has a liquid cooling for the frequency inverter (8).

2. A winch in accordance with the preceding claim, wherein the electronics cooling apparatus (15) has a liquid cooling circuit for cooling the frequency inverter which has a cooling jacket and/or cooling tube hose at or in the frequency inverter (8).

3. A winch in accordance with one of the two preceding claims, wherein the liquid cooling of the electronics cooling apparatus (15) includes a cooling liquid on a water basis, preferably water or a water/glycol mixture.

4. A winch in accordance with one of the preceding claims, wherein a motor cooling device (12) comprising at least one liquid cooler (14) is provided for the cooling the electric motor (4).

5. A winch in accordance with the preceding claim, wherein the liquid cooling circuit (14) of the motor cooling apparatus (12) is made separately from the liquid cooling circuit (16) of the electronics cooling device (15).

6. A winch in accordance with the preceding claim, wherein the cooling circuits of the motor cooling apparatus (12) and of the electronics cooling apparatus (15) include separate cooling fluid conveying means (18).

7. A winch in accordance with claim 5, wherein the liquid cooling circuit (16) of the electronics cooling apparatus (15) is connected in series or in parallel to the liquid cooling circuit (14) of the motor cooling apparatus (12).

8. A winch in accordance with one of the preceding claims, wherein a transmission cooling apparatus (9) comprising at least one liquid cooling circuit (11) is provided for cooling a transmission (5) arranged in the interior of the hoisting drum (2).

9. A winch in accordance with the preceding claim, wherein the liquid cooling circuit of the transmission cooling apparatus (9) is made separately from the cooling circuit of the electronics cooling apparatus (15) and/or is combined, in particular connected in series or in parallel, with the liquid cooling circuit of the motor cooling apparatus (12).

10. A winch in accordance with one of the preceding claims, wherein the hoisting drum (2) has an end-face access opening through which the frequency inverter (8) is accessible and is preferably also replaceable with an installed winch.

11. A winch in accordance with one of the preceding claims, wherein the frequency inverter (8) is arranged spaced apart from the electric motor (4) at the end-face end of the inner space of the hoisting drum (2), with a speed encoder and/or rotary encoder (30) being received between the frequency inverter (8) and the electric motor (4) in the hoisting drum (2).

12. A winch in accordance with one of the claims 1 to 10, wherein the frequency inverter (8) is installed at the end face at the electric motor (4).

13. A winch in accordance with one of the preceding claims, wherein the frequency inverter (8) is made in modular form and comprises a plurality of partial inverters which are each associated with a winding part of the electric motor (4).

## Revendications

1. Treuil pour engins de levage, notamment des grues-tours, des grues mobiles, des grues de port ou des machines comme les excavateurs à câble, avec un tambour à câble (2), un moteur électrique (4) destiné à l'entraînement du tambour à câble (2), qui est logé à l'intérieur du tambour à câble (2), ainsi qu'un système électronique de puissance et/ou de commande (7) pour le moteur électrique (4) comprenant au moins un convertisseur de fréquence (8) et/ou transformateur, le système électronique de puissance et/ou de commande (7) pour le moteur électrique (4) étant logé au moins partiellement à l'intérieur du tambour à câble (2), **caractérisé en ce que** le convertisseur de fréquence (8) est logé complètement à l'intérieur du tambour à câble (2) et **en ce qu'**un dispositif de refroidissement du système électronique (15) présente un refroidissement liquide pour le convertisseur de fréquence (8) à l'intérieur du tambour à câble (2).

2. Treuil selon la revendication précédente, le dispositif de refroidissement du système électronique (15) présentant un circuit de refroidissement liquide destiné au refroidissement du convertisseur de fréquence, qui présente une chemise réfrigérante et/ou des serpentins de refroidissement sur le convertisseur de fréquence (8) ou dans celui-ci.

3. Treuil selon une quelconque des deux revendications précédentes, le refroidissement liquide du dispositif de refroidissement du système électronique (15) comprenant un liquide de refroidissement à base aqueuse, de préférence de l'eau ou un mélange eau-glycol.

4. Treuil selon une quelconque des revendications précédentes, un dispositif de refroidissement du moteur (12) comprenant au moins un circuit de refroidissement liquide (14) étant prévu pour le refroidissement du moteur électrique (4).

5. Treuil selon la revendication précédente, le circuit de refroidissement liquide (14) du dispositif de refroidissement du moteur (12) étant construit séparément du circuit de refroidissement liquide (16) du dispositif de refroidissement du système électronique (15).

6. Treuil selon la revendication précédente, les circuits de refroidissement du dispositif de refroidissement du moteur (12) et du dispositif de refroidissement du système électronique (15) comprenant des moyens de transport séparés du liquide de refroidissement (18).

7. Treuil selon la revendication 5, le circuit de refroidissement liquide (16) du dispositif de refroidissement du système électronique (15) étant connecté en série ou en dérivation avec le circuit de refroidissement liquide (14) du dispositif de refroidissement du moteur (12).

8. Treuil selon une quelconque des revendications précédentes, un dispositif de refroidissement du train d'engrenages (9) comprenant au moins un circuit de refroidissement liquide (11) étant prévu pour le refroidissement d'un train d'engrenages (5) disposé à l'intérieur du tambour à câble (2).

9. Treuil selon la revendication précédente, le circuit de refroidissement liquide du dispositif de refroidissement du train d'engrenages (9) étant construit séparément du circuit de refroidissement du dispositif de refroidissement du système électronique (15), et/ou connecté de manière groupée avec le circuit de refroidissement liquide du dispositif de refroidissement du moteur (12), notamment en série ou en dérivation.

10. Treuil selon une quelconque des revendications précédentes, le tambour à câble (2) présentant une ouverture d'accès frontale, à travers laquelle le convertisseur de fréquence (8) est accessible et remplaçable de préférence aussi lorsque le treuil est monté.

11. Treuil selon une quelconque des revendications précédentes, le convertisseur de fréquence (8) du moteur électrique (4) étant disposé à l'écart sur l'extrémité frontale de l'intérieur du tambour à câble (2), un transmetteur de vitesse et/ou capteur angulaire (30) étant logé entre le convertisseur de fréquence (8) et le moteur électrique (4) dans le tambour à câble (2).

12. Treuil selon une quelconque des revendications 1 à 10, le convertisseur de fréquence (8) étant ajouté frontalement au moteur électrique (4).

13. Treuil selon une quelconque des revendications précédentes, le convertisseur de fréquence (8) étant construit de manière modulaire et comprenant plusieurs mutateurs partiels, qui sont affectés respectivement à une partie de bobine du moteur électrique (4).
